# EUROPEAN PATENT APPLICATION

(11) **EP 2 116 724 A1**
(43) Date of publication of application: **11.11.2009**
(21) Application number: 07828840.4
(22) Date of filing: 28.09.2007
(51) Int. Cl.: F04B 39/12, F04B 39/00

(54) **ELECTRIC COMPRESSOR FOR AUTOMOBILE USE**

(30) Priority: 06.03.2007 JP 2007055210
(71) Applicant: Mitsubishi Heavy Industries, Ltd., Tokyo 108-8215 (JP)
(72) Inventor: HOSHINO, Akihiro, Nagoya-shi Aichi 453-8515 (JP); NAKANO, Koji, Nagoya-shi Aichi 453-8515 (JP); HATTORI, Makoto, Kiyosu-shi Aichi 452-8561 (JP); TOYAMA, Koji, Nagoya-shi Aichi 453-8515 (JP)
(74) Representative: Intes, Didier Gérard André
(86) International application number: PCT/JP2007/069099
(87) International publication number: WO 2008/108023

(57) **Abstract**

An object of the present invention is to provide an electric compressor for automobile use, which can satisfy a plurality of requirements including protection of an inverter board, suppression of electromagnetic noise, vibration and noise, and the like. A cover (20B) covering an opening of a housing (11) of the electric compressor is configured by laminating a conductive material layer 21 formed of a conductive material and an insulating material layer (22) formed of an insulating material. By the conductive material layer (21) of the cover (20B), electromagnetic noise radiated from the inverter board (12) and the like is prevented from leaking to the outside of the housing (11). Also, by providing the insulating material layer (22) so as to be directed to the inside of the housing (11), the conductive material layer (21) of the cover (20B) is insulated from the inverter board (12) to which a high voltage is applied, so that the electric compressor is made small in size. Also, by the insulating material layer (22), vibration of the conductive material layer (21) is suppressed, thus reducing vibration and noise of the electric compressor.

## Description

### Technical Field

The present invention relates to an electric compressor for automobile use constituting an air conditioner for automobile use.

### Background Art

An air conditioner for automobile use is required to have space-saving properties to accommodate various pieces of equipment in an engine room of a vehicle. To meet this requirement, in recent years, there has been provided an electric compressor unit in which a compressor constituting an air conditioner for automobile use, a motor for driving the compressor, and an inverter board for converting a direct current to an alternating current to drive the motor are integrated (for example, described in Patent Document 1).
Patent Document 1: Japanese Patent No. 3086819

### Disclosure of the Invention

### Problems to be Solved by the Invention

With recent advances in electric control of a vehicle, a housing forming the shell of such an electric compressor has been required to suppress radiation of electromagnetic noise, so that the housing has conventionally been formed of a conductive material such as aluminum.

In addition, since a voltage as high as 300 V is applied to the inverter board to rotationally drive the motor, the housing must have insulating properties from the surroundings.

Furthermore, vibration and noise caused by the rotation of the compressor are required to be suppressed for the quietness of the vehicle.

The present invention has been accomplished to solve the above technical problems, and accordingly an object thereof is to provide an electric compressor for automobile use, which can satisfy a plurality of requirements including security of insulating properties, suppression of electromagnetic noise, vibration and noise, and the like.

### Means for Solving the Problems

An electric compressor for automobile use of the present invention accomplished to achieve the above object comprises a compressor constituting an air conditioner for automobile use; a motor for driving the compressor; a control board for controlling the operation of the motor; a housing which accommodates the compressor, the motor, and the control board, and has an opening above the control board; and a cover which is arranged so as to face the control board to close the opening of the housing, and is configured by laminating a conductive material layer formed of a conductive material and an insulating material layer formed of an insulating material.

According to this configuration, by the conductive material layer of the cover, electromagnetic noise radiated from the control board can be prevented from leaking to the outside of the housing.

To the control board, a voltage as high as 300 V generated by a generator constituting the air conditioner for automobile use is supplied. Therefore, if a metal such as a battery terminal is inadvertently brought into contact with the cover covering the inverter board of the electric compressor, an electrical short circuit or the like may occur. If the insulating material layer is provided so as to be directed to the outside of the housing, even if the terminal of, for example, a battery or a booster cable, the terminal of electronic equipment, or the like is inadvertently brought into contact with the cover from the outside, insulation from a high voltage flowing in the control board can be attained, and an electrical short circuit with the control board can be prevented.

Furthermore, by forming the insulating material layer of a resin or a rubber-based material, vibration of the conductive material layer produced by the vibration caused by the rotation of the compressor can be suppressed, and thereby vibration and noise of the electric compressor can be reduced.

Also, since a high voltage is applied to the inverter board, to secure the insulating properties from the housing, a certain distance (referred to as an insulation distance) is needed, which hinders the downsizing of the housing. Therefore, if the cover is provided in the state in which the insulating material layer is arranged on the side of the control board accommodated in the housing, by the insulating material layer, the conductive material layer of the cover can be insulated from the control board to which a high voltage is applied, so that the distance between the control board and the conductive material layer (insulation distance) can be decreased.

Furthermore, it is effective that in the outer peripheral part of the cover, the conductive material layer is formed with an extending part extending to the housing side, and the extending part is provided so as to cover the side of the insulating material layer interposed between the conductive material layer and the housing. Thereby, electromagnetic noise can be restrained from leaking from the insulating material layer interposed between the conductive material layer and the housing to the side. Also, if the extending part is provided so as to be in direct contact with the outer peripheral surface of the housing, electrical continuity between the conductive material layer and the housing can be increased.

### Advantages of the Invention

According to the present invention, by the cover configured by laminating the conductive material layer formed of a conductive material and the insulating material layer formed of an insulating material, the plurality of requirements including security of insulating properties, suppression of electromagnetic noise, vibration and noise, and the like can be satisfied.

### Brief Description of the Drawings

Figure 1 is a view showing a general configuration of an electric compressor in accordance with an embodiment;
Figure 2 is a view showing an example of a cover for an electric compressor, showing a case where an insulating material layer is provided so as to be directed to the outside of a housing;
Figure 3 is a view showing an example of a cover for an electric compressor, showing a case where an insulating material layer is provided so as to be directed to the inside of a housing; and
Figure 4 is a view showing a modified example of the cover shown in Figure 3.

### Description of Symbols

10 ... electric compressor, 11 ... housing, 12 ... inverter board (control board), 13 ... capacitor, 14 ... reactor, 15 ... control circuit board, 20, 20A, 20B, 20C ... cover, 21 ... conductive material layer, 21a ... extending part, 22 ... insulating material layer, 23 ... bolt

### Best Mode for Carrying Out the Invention

The present invention will now be described in detail based on an embodiment shown in the accompanying drawings.

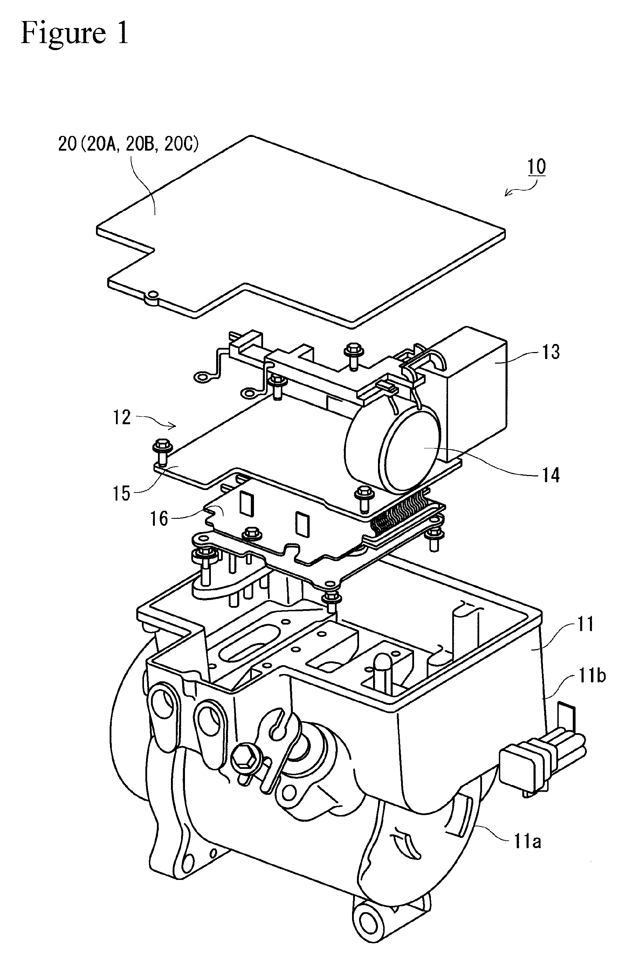

Figure 1 is a view showing a configuration of an electric compressor 10 in accordance with this embodiment.

As shown in Figure 1, for the electric compressor 10, a motor (not shown) and a scroll compressor (not shown) are accommodated in a lower accommodation chamber 11a of a housing 11, and an inverter board (control board) 12 is accommodated in an upper accommodation chamber 11b, which has an upward opening, of the housing 11.

The inverter board 12 comprises a capacitor 13 and a reactor 14, which are used for smoothing a dc voltage supplied to the inverter board 12, a control circuit board 15 for controlling the application of a high ac voltage to the motor, and a power board 16 for converting a high-voltage direct current to a high-voltage alternating current and applying the alternating current to the motor to rotationally drive the motor.

The upward opening of the upper accommodation chamber 11b is covered with a cover 20. Hereunder, a plurality of modes of the cover 20 are explained.

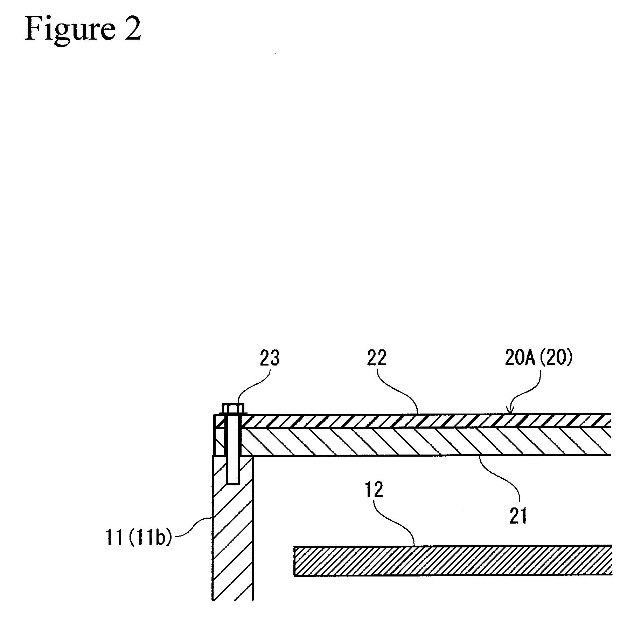

A cover 20A shown in Figure 2 has an external shape that corresponds to the shape of the opening of the upper accommodation chamber 11b, and is configured so that a conductive material layer 21 formed of a conductive material such as aluminum or an iron-based material and an insulating material layer 22 formed of an insulating material such as a resin or a rubber-based material are laminated. By the contact of the conductive material layer 21 of the cover 20A with the housing 11, electrical continuity is made.

The cover 20A can be provided in the state in which the insulating material layer 22 is directed to the outside of the housing 11, and the conductive material layer 21 is directed to the inside of the housing 11.

The cover 20A is attached to the housing 11 with bolts 23 or the like.

In the above-described configuration, by the conductive material layer 21 of the cover 20A, electromagnetic noise radiated from the inverter board 12 and the like can be prevented from leaking to the outside of the housing 11.

By providing the insulating material layer 22 so as to be directed to the outside of the housing 11, even if the terminal of, for example, a battery or a booster cable, the terminal of electronic equipment, or the like is inadvertently brought into contact with the cover 20A in the engine room of a vehicle, insulation from a high voltage flowing in the inverter board 12 can be attained, and an electrical short circuit with the inverter board 12 can be prevented.

Furthermore, since the insulating material layer 22 is formed of a resin or a rubber-based material, vibration of the conductive material layer 21 of the cover 20A produced by the vibration caused by the rotation of the compressor can be suppressed, and thereby vibration and noise of the electric compressor 10 can be reduced.

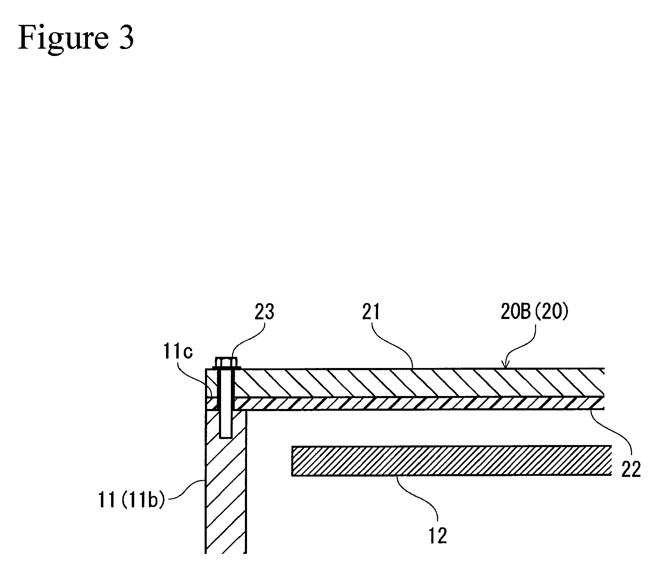

Also, a cover 20B shown in Figure 3 differs from the cover 20A shown in Figure 2 in that the lamination sequence of the conductive material layer 21 and the insulating material layer 22 is reversed. That is to say, the cover 20B configured by laminating the conductive material layer 21 formed of a conductive material and the insulating material layer 22 is provided in the state in which the insulating material layer 22 is directed to the inside of the housing 11, and the conductive material layer 21 is directed to the outside of the housing 11.

In the cover 20B, electrical continuity between the conductive material layer 21 of the cover 20B and the housing 11 is made by the bolts 23 for attaching the cover 20B to the housing 11.

In the above-described configuration, by the conductive material layer 21 of the cover 20B, electromagnetic noise radiated from the inverter board 12 and the like can be prevented from leaking to the outside of the housing 11.

Also, by providing the insulating material layer 22 so as to be directed to the inside of the housing 11, the conductive material layer 21 of the cover 20B can be insulated from the inverter board 12 to which a high voltage is applied, so that the distance between the inverter board 12 and the conductive material layer 21 (insulation distance) can be decreased. As a result, the housing 11, that is, the electric compressor 10 can be made small in size.

Also, this insulating material layer 22 is provided so as to be interposed between the conductive material layer 21 and an outer peripheral edge part 11c of the housing 11, and is formed of a resin or a rubber-based material that is softer than the conductive material layer 21 and the housing 11, so that the insulating material layer 22 functions as a packing between the cover 20B and the housing 11. Thereby, the sealing ability between the cover 20B and the housing 11 is enhanced, and thereby the waterproofness and dustproofness in the housing 11 can be improved.

Furthermore, by this insulating material layer 22 as well, vibration of the conductive material layer 21 of the cover 20B produced by the vibration caused by the rotation of the compressor can be suppressed, and thereby vibration and noise of the electric compressor 10 can be reduced.

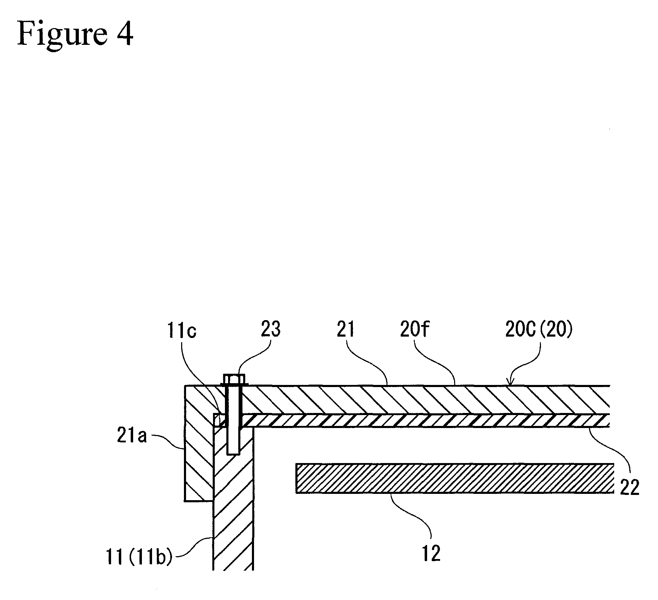

A cover 20c shown in Figure 4 is configured so as to have a shape such that the conductive material layer 21 is in direct contact with the housing 11 in the outer peripheral part of the cover 20B shown in Figure 3.

That is to say, the cover 20C is configured by laminating the conductive material layer 21 formed of a conductive material and the insulating material layer 22, and is provided in the state in which the insulating material layer 22 is directed to the inside of the housing 11 and the conductive material layer 21 is directed to the outside of the housing 11. In the outer peripheral part of the cover 20C, the conductive material layer 21 is integrally formed with an extending part 21a that intersects at right angles with a surface 20f of the main part of the cover 20C and extends to the housing 11 side. This extending part 21a may be formed continuously throughout the entire periphery of the outer peripheral part of the cover 20C, or may be formed at a plurality of locations.

The cover 20C is fixed to the housing 11 with bolts 23 or the like. It is preferable that the extending part 21a of the conductive material layer 21 be in direct contact with the outer peripheral surface of the housing 11 in the state in which the cover 20C is fixed to the housing 11.

In the above-described configuration, like the cover 20B shown in Figure 3, by the conductive material layer 21 of the cover 20C, electromagnetic noise radiated from the inverter board 12 and the like can be prevented from leaking to the outside of the housing 11.

Also, by providing the insulating material layer 22 so as to be directed to the inside of the housing 11, the conductive material layer 21 of the cover 20C can be insulated from the inverter board 12 to which a high voltage is applied, so that the electric compressor 10 can be made small in size. Further, the insulating material layer 22 is provided so as to be interposed between the conductive material layer 21 and the outer peripheral edge part 11c of the housing 11, so that the insulating material layer 22 functions as a packing. Thereby, the waterproofness and dustproofness in the housing 11 can be improved.

In addition, by this insulating material layer 22, vibration of the conductive material layer 21 can be suppressed, and thereby vibration and noise of the electric compressor 10 can be reduced.

In the cover 20C, since the extending part 21a is located on the outer periphery side of the insulating material layer 22, electromagnetic noise is restrained from leaking from the insulating material layer 22 interposed between the conductive material layer 21 and the housing 11 to the side, so that the electromagnetic noise suppressing effect is further enhanced. Also, if the extending part 21a formed in the outer peripheral part of the conductive material layer 21 is brought into direct contact with the outer peripheral surface of the housing 11, electrical continuity between the conductive material layer 21 of the cover 20C and the housing 11 can be increased. Also, since being formed so as to intersect at right angles with the surface 21f of the main part of the conductive material layer 21, the extending part 21a also functions as a reinforcement for the cover 20C. Thereby, the thickness of the conductive material layer 21 can be decreased, which leads to a reduction in weight of the electric compressor 10.

In the above-described embodiment, the shapes and constructions of parts of the electric compressor 10, the configuration of the inverter board 12, and the like are not subject to any restriction.

Also, the insulating material layer 22 may be provided not only on either one surface side of the conductive material layer 21 but also on both surface sides thereof. In the latter case, the effects of both of the covers 20A and 20B shown in Figures 2 and 3 can be achieved.

Besides, the configurations described in the above-described embodiment can be chosen or changed appropriately to other configurations without departing from the spirit and scope of the present invention.

## Claims

1. An electric compressor for automobile use comprising:
a compressor constituting an air conditioner for automobile use;
a motor for driving the compressor;
a control board for controlling the operation of the motor;
a housing which accommodates the compressor, the motor, and the control board, and has an opening above the control board; and
a cover which is arranged so as to face the control board to close the opening of the housing, and is configured by laminating a conductive material layer formed of a conductive material and an insulating material layer formed of an insulating material.

2. The electric compressor for automobile use according to claim 1, wherein the cover is provided in a state in which the insulating material layer is arranged on the side of the control board accommodated in the housing.

3. The electric compressor for automobile use according to claim 2, wherein
in the outer peripheral part of the cover, the conductive material layer is formed with an extending part extending to the housing side; and
the extending part is provided so as to cover the side of the insulating material layer interposed between the conductive material layer and the housing.

4. The electric compressor for automobile use according to claim 3, wherein the extending part is provided so as to be in direct contact with the outer peripheral surface of the housing.
